**Europäisches Patentamt**

**European Patent Office**

**Office européen des brevets**

(19)

(11) Veröffentlichungsnummer : **0 193 749**
**B1**

(12)

# EUROPÄISCHE PATENTSCHRIFT

(45) Veröffentlichungstag der Patentschrift :
09.11.88

(21) Anmeldenummer : **86101586.5**

(22) Anmeldetag : **07.02.86**

(51) Int. Cl.⁴ : **F 16 H 25/20**

(54) **Mechanische Linearantriebseinheit.**

(30) Priorität : **02.03.85 DE 3507497**

(43) Veröffentlichungstag der Anmeldung :
**10.09.86 Patentblatt 86/37**

(45) Bekanntmachung des Hinweises auf die Patenterteilung : **09.11.88 Patentblatt 88/45**

(84) Benannte Vertragsstaaten :
**AT BE CH DE FR GB IT LI LU NL SE**

(56) Entgegenhaltungen :
**EP-A- 0 106 826
DD-A-    203 108
DE-C- 3 205 143
FR-A- 1 046 546
FR-A- 2 447 494
FR-A- 2 465 930
US-A- 2 481 477
US-A- 2 630 022
US-A- 3 670 583
US-A- 4 085 625**

(73) Patentinhaber : **PROMA Produkt- und Marketing Gesellschaft m.b.H.
Beethovenstrasse 75
D-7310 Plochingen (DE)**

(72) Erfinder : **Lipinski, Reinhard, Ing.
Ernst-Sachs-Strasse 21
D-7310 Plochingen (DE)**
Erfinder : **Kaiser, Siegmund H., Ing.
Grünewaldstrasse 47
D-7440 Nürtinge (DE)**

(74) Vertreter : **Rüger, Rudolf, Dr.-Ing. et al
Patentanwälte Dr.-Ing. R. Rüger Dipl.-Ing. H.P. Bartheit Webergasse 3 Postfach 348
D-7300 Esslingen/Neckar (DE)**

## Beschreibung

Die Erfindung betrifft eine mechanische Linear-Antriebseinheit zur Erzeugung einer begrenzten Linearbewegung angetriebener Kraftübertragungsmittel gemäß dem Oberbegriff des Patentanspruchs 1, wie sie aus der US-A-2 481 477 bekannt ist.

Eine mechanische Linear-Antriebseinheit mit einem einzigen Antriebsmittel ist aus der DE-C 3 205 143 bekannt. Bei dieser Lineareinheit ist die Gewindespindel in den Lagerflanschen des Profilrohres drehbar gelagert und mit einem außen auf einen der Lagerflansche aufgesetzten Elektromotor kuppelbar. Diese Lineareinheit zeichnet sich u. a. dadurch aus, daß das Kraftübertragungselement exakt positionierbar ist und große Antriebskräfte übertragen werden können. Da die Längsbewegung des Kraftübertragungselementes durch die angetriebene Gewindespindel zwangsläufig erzeugt wird, ist es grundsätzlich nicht möglich, auf einer Achse mehrere Kraftübertragungselemente unabhängig voneinander zu bewegen. Auch ist eine Veränderung der Geschwindigkeit der Linearbewegung eines Kraftübertragungselementes nur über eine entsprechende Beeinflussung der Gewindespindeldrehzahl möglich.

Es gibt aber Anwendungsfälle, bei denen eine größere Freizügigkeit hinsichtlich der Antriebsmöglichkeiten für zu erzeugende Linearbewegungen erwünscht wäre.

Dies gilt auch für einen aus dem DE-U-8 132 113 bekannten Stellantrieb mit einer mit einem Außengewinde versehenen, gegen Drehung gesicherten Stellspindel, die in ein über eine Schlupfkupplung und ein Getriebe an einen. Motor angekuppeltes Mutterstück eingeschraubt ist, welches axial unverschiebbar in einem Getriebegehäuse gelagert ist und durch Drehung die Stellspindel axial verschiebt. Bei diesem Stellantrieb kommt noch hinzu, daß die Axialverstellung der Stellspindel deren Unterbringung in einem sie über ihre gesamte Länge umschließenden und damit gegen äußere Einflüsse schützenden Profilrohr ausschließt. Es besteht keine Möglichkeit, die Stellbewegung von mehr als einer einzigen Antriebsquelle abzuleiten.

Aufgabe der Erfindung ist es deshalb, eine mechanische Linear-Antriebseinheit zu schaffen, die sich im Vergleich zu der gattungsgemäßen Lineareinheit durch erweiterte Einsatzmöglichkeiten auszeichnet, ohne daß dadurch der Platzbedarf wesentlich erhöht oder die Präzision der Positionierung der angetriebenen Teile oder deren Bewegung beeinträchtigt wären.

Zur Lösung dieser Aufgabe weist die eingangs genannte Linear-Antriebseinheit erfindungsgemäß die Merkmale des kennzeichnenden Teiles des Patentanspruchs 1 auf.

Weiterbildungen ergeben sich aus den Unteransprüchen.

Die Spindelteile (Gewindespindelteile) können dabei jeweils für sich durch eine eigene, auf dem zugeordneten Lagerflansch aufgesetzte Antriebsquelle angetrieben werden, doch ist es, abhängig von dem Einsatzzweck auch möglich, beispielsweise nur eines der Spindelteile anzutreiben und das andere in dem Profilrohr unverdrehbar zu haltern. Die auf den Spindelteilen angeordneten Spindelmuttern können in entsprechender Weise ebenfalls entweder alle jeweils mit einer eigenen weiteren Antriebsquelle über ein Getriebe in der bereits beschriebenen Weise gekuppelt sein, oder aber es können nur einzelne der Spindelmuttern in dieser Weise ausgebildet sein. Die Linear-Antriebseinheit gestattet es, durch entsprechende Wahl und Zuordnung der Antriebsquellen zu den Spindelteilen und den Spindelmuttern nicht nur den mit den Spindelmuttern verbundenen Kraftübertragungselementen unterschiedliche Linearbewegungen zu erteilen, sondern auch zu erreichen, daß sich einzelne Kraftübertragungselemente aufeinander zu oder voneinander weg bewegen, d. h. ihren gegenseitigen Abstand verändern. Es gibt viele Anwendungsfälle, bei denen eine solche Vielfältigkeit der Bewegungsmöglichkeiten von Bedeutung ist.

Die Linear-Antriebseinheit kann nach Art einer Baueinheit oder eines Moduls zur Erzeugung einer oder mehrerer Linearbewegungen bei Maschinen, Vorschubeinheiten, Transfereinrichtungen und dergl. eingesetzt werden. Sie gestattet es, hohe Lasten mit hoher Geschwindigkeit linear zu bewegen. Wegen der erzielbaren hohen Positionierungsgenauigkeit und der exakten zwangsläufigen Abhängigkeit zwischen dem Drehwinkel der Antriebsquelle(n) und der zugeordneten Position des Kraftübertragungselementes kann die Linear-Antriebseinheit auch für hochgenaue Meß-, Positionier- und Anzeigeeinrichtungen verwendet werden, bei denen es bspw. darum geht, ein elektrisches Signal in eine bestimmte Weglänge oder Position umzusetzen. Abhängig von der Art der verwendeten Antriebsquelle(n) — Gleichstrommotor, Schrittmotor etc. — können analoge und elektrische Signale zur Ansteuerung der Linear-Antriebseinheit benutzt werden.

In der Zeichnung sind Ausführungsbeispiele des Gegenstandes der Erfindung dargestellt. Es zeigen:

Fig. 1 eine mechanische Linear-Antriebseinheit gemäß der Erfindung, in perspektivischer Darstellung, teilweise aufgeschnitten und im Ausschnitt,

Fig. 2 die Linear-Antriebseinheit nach Fig. 1, geschnitten längs der Linie II-II der Fig. 1, in einer Seitenansicht,

Fig. 3 eine mechanische Linear-Antriebseinheit gemäß der Erfindung im axialen Schnitt, in einer Seitenansicht und in schematischer Darstellung und

Fig. 4 eine mechanische Linear-Antriebseinheit gemäß der Erfindung in einer abgewandelten Ausführungsform, in einer schematischen Darstellung entsprechend Fig. 3.

Die mechanische Linear-Antriebseinheit weist ein bspw. aus Aluminium stranggepreßtes Profilrohr 1 auf, das eine zylindrische Längsbohrung 2 enthält und an einer Seite mit einem achsparallelen, in die Längsbohrung 2 führenden Längsschlitz 3 ausgebildet ist. Der Längsschlitz 3 ist parallelflankig begrenzt. Er mündet auf der Profilrohraußenseite in einer ebenen Fläche 4, der eine entsprechende parallele Fläche 5 auf der gegenüberliegenden Seite zugeordnet ist. An der Außenwandung des Profilrohres 1 sind vier gleichmäßig verteilt angeordnete und sich über die Rohrlängsrichtung erstreckende prismatische Längsführungen 6 von etwa rechtwinkliger Querschnittsgestalt angeordnet.

In der Bohrung 2 ist konzentrisch zu deren Achse 8 eine Gewindespindel 7 angeordnet, die beidenends in zwei Lagerflanschen gelagert ist, von denen einer bei 9 dargestellt ist und die beide auf die gegenüberliegenden Stirnflächen des Profilrohres 1 aufgesetzt sind.

Die Gewindespindel 7 kann in den Lagerflanschen 9 drehfest gehalten sein. Die Anordnung kann aber auch derart getroffen sein, daß die Gewindespindel 7 in den Lagerflanschen 9 drehbar gelagert und einenends mit einem auf einen der Lagerflanschen 9 aufgesetzten Elektromotor 10 gekuppelt ist, der eine eigene Antriebsquelle für die Gewindespindel 7 bildet.

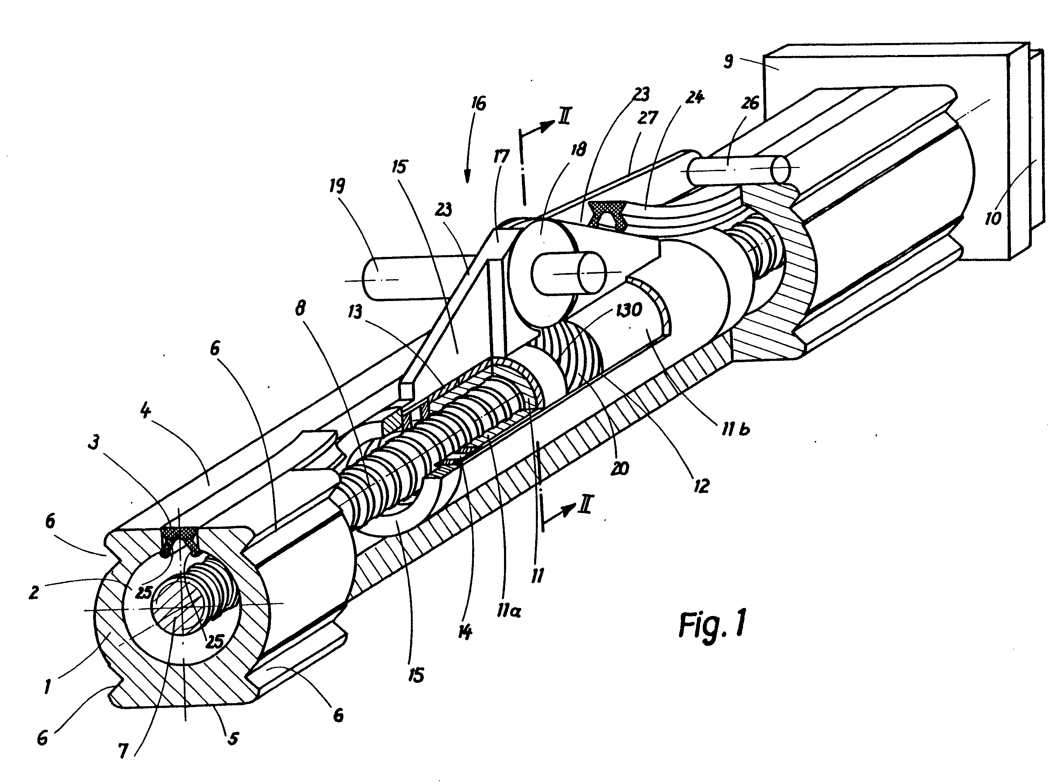

Auf die Gewindespindel 7 ist eine zweiteilige Spindelmutter 11 aufgesetzt, deren beide Teile 11a, 11b beidseitig eines büchsenartigen, ein Antriebselement für die Spindelmutter 11 bildenden Zwischenstückes 12 liegen. Die beiden Gewindemutterteile 11a, 11b sind drehfest mit dem Zwischenstück 12 verbunden, welches in einem rohrförmigen Gehäuse 13 gemeinsam mit der Spindelmutter 11 drehbar, aber, bezüglich des Gehäuses 13, unverschieblich gelagert ist. Zu diesem Zwecke sind beide Spindelmutterteile 11a, 11b gegen das rohrförmige Gehäuse durch Radial- und Axiallager abgestützt, von denen eines der Axiallager bei 14 dargestellt ist. Das Axiallager 14 ist axial durch einen auf das Gehäuse 13 aufgesetzten Widerlagerring 15 gehalten, der gleichzeitig, gemeinsam mit einem am anderen Ende des rohrförmigen Gehäuses 13 angeordneten und in Fig. 1 nicht sichtbaren zweiten gleichgestalteten Widerlagerring, den beiden Spindelmutterteilen 11a, 11b eine axiale gegenseitige Vorspannung erteilt und diese gegen das Zwischenstück 12 anpreßt. Auf diese Weise wird der von der Gewindespindel 7 und der Spindelmutter 11 gebildete Spindeltrieb spielfrei.

Das rohrförmige Gehäuse 13 ist in der Bohrung 2 des Profilrohres 1 längsverschieblich geführt; es trägt auf seiner Wandungsaußenseite ein stegartiges Kupplungselement 15, das durch den Längsschlitz 3 ragt und in diesem seitlich geführt ist. Das stegartige Kupplungselement 15 und das die Gewindespindel 7 umgreifende Gehäuse 13 bilden gemeinsam ein Kraftübertragungselement 16, das mit nicht weiter dargestellten Einrichtungen, bspw. Bohrungen etc., zum Anschluß an ein von ihm bewegendes Maschinenteil und dergl. versehen ist.

In einem Lagerteil 17 des Kupplungsteiles 15 des Kraftübertragungselementes 16 ist ein schrägverzahntes Stirnzahnrad 8 drehbar gelagert, das drehfest auf einer Antriebswelle 19 sitzt und dessen Verzahnung mit einer ebenfalls als Schrägverzahnung ausgebildeten Außenverzahnung 20 des Zwischenstückes 12 in Eingriff steht. Das auf diese Weise gebildete Winkelgetriebe gestattet es, eine Drehbewegung der Antriebswelle 19 in eine entsprechende Linearbewegung des Kraftübertragungselementes 16 längs des Längsschlitzes 3 umzusetzen.

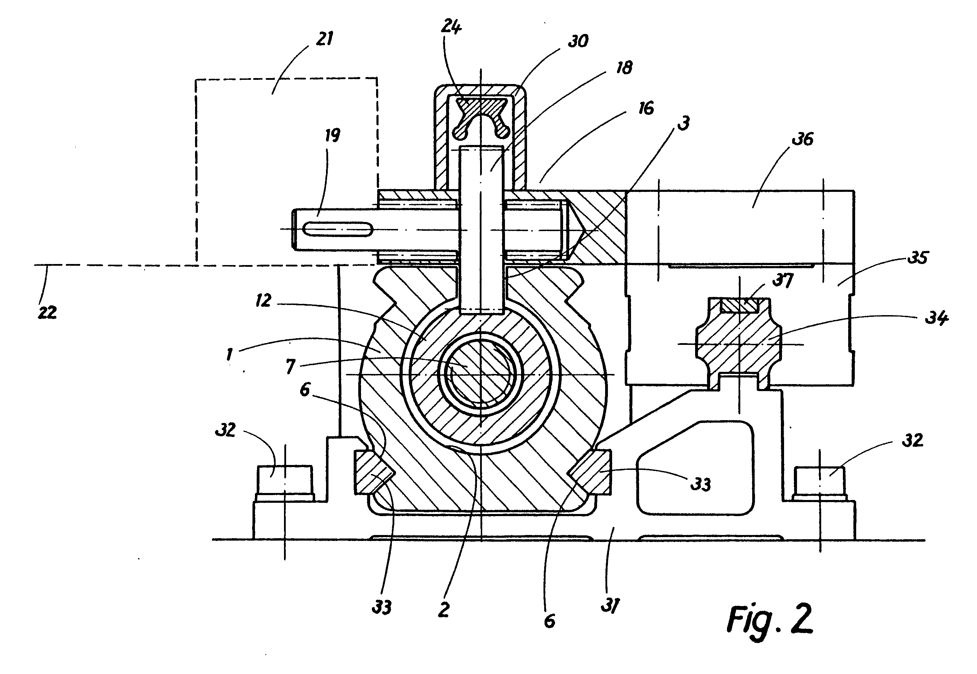

Um diese Linearbewegung zu erzeugen, ist mit dem Kraftübertragungselement 16 eine Antriebsquelle in Gestalt eines in Fig. 2 bei 21 gestrichelt angedeuteten Elektromotors verbunden, der mit der Antriebswelle 19 gekuppelt ist und eine flexible elektrische Zuleitung 22 aufweist. Der Elektromotor 21 kann an sich beliebiger Bauart sein. Es kann sich auch um einen Schrittmotor handeln, wie es natürlich auch möglich ist, eine pneumatische oder hydraulische Antriebsquelle an seiner Stelle vorzusehen.

Das stegartige Kupplungsteil 15 ist beidseitig der Antriebswelle 19 mit zwei keilartig zulaufenden, schrägliegenden Flächen 23 versehen, die zur Führung eines elastischen Abdeckbandes 24 für den Längsschlitz 3 dienen. Das biegsame Abdeckband 24 ist endseitig in den beiden Lagerflanschen 9 verankert. Es weist zwei seitlich zusammendrückbare Längsstege 25 auf, mit denen es die Schlitzberandung untergreifend an die Wandungen des Längsschlitzes 3 elastisch angedrückt ist.

Wie aus Fig. 1 zu ersehen, ist der Längsschlitz 3 beidseitig des Kraftübertragungselementes 16 durch das in ihn eingedrückte und kraft- sowie formschlüssig in ihm gehaltene Abdeckband 24 verschlossen. Bei einer Bewegung des Kraftübertragungselementes 16, bspw. nach links (bezogen auf Fig. 1), wird das Abdeckband 24 auf der linken Seite durch die zugeordnete Führungsfläche 23 kontinuierlich aus dem Längsschlitz 3 ausgehoben, während auf der rechten Seite das von der anderen Führungsfläche 23 ablaufende Abdeckband 24 durch eine mit dem Kraftübertragungselement 16 verbundene Andrückrolle 26 fortlaufend in den Längsschlitz 3 eingedrückt wird. Die Andrückrolle 26 ist mit dem Kraftübertragungselement 16 über zwei Laschen 27 verbunden, von denen in Fig. 1 lediglich eine dargestellt ist. Außerdem ist auch auf der anderen Seite des Kraftübertragungselementes 16 eine entsprechend ausgebildete und gelagerte Andrückrolle vorhanden, die in Fig. 1 der besseren Klarheit wegen weggelassen wurde.

Das Kraftübertragungselement 16 kann im übrigen nach außen durch eine Haube abgedeckt sein, wie sie in Fig. 2 bei 30 angedeutet ist. Das Profilrohr 1 ist auf ein Sockelteil 31 aufgesetzt, das mittels Befestigungsschrauben 32 auf einer Unterlage festgeschraubt ist und das Klemmleisten 33 prismatischer Querschnittsgestalt aufweist, die in die Längsführungen 6 des Profilrohres 1 eingreifen und mit diesem verklemmt sind. Auf dem gegebenenfalls mehrteiligen Sockelteil 31 ist, parallel zu der Achse des Profilrohres 1 ausgerichtet, eine Führungsschiene 34 befestigt, die eine Führungsbahn für einen Schieber 35 bildet, welcher im Querschnitt im wesentlichen C-förmig ist und auf der Führungsschiene 34 mittels nicht weiter dargestellter Linearlager längsverschieblich geführt ist. Der Schieber 34 ist über ein Verbindungselement 36 mit dem Kraftübertragungselement 16 starr verbunden. Er wirkt bspw. mit einem in die Führungsschiene 34 eingelassenen Maßstab 37 zusammen, mit dem er ein hochpräzises Meßsystem bildet.

Alternativ kann mit dem Schieber 34 oder dem Kraftübertragungselement 16 auch ein anderes Maschinenelement gekuppelt sein, dem von der beschriebenen Linearantriebseinheit eine Längsbewegung erteilt wird. Diese Längsbewegung kann, wie bereits erläutert, durch den Antriebsmotor 21 über die Antriebsquelle 19 und/oder über den Antriebsmotor 10 und die Gewindespindel 7 erzeugt werden.

Auf die Gewindespindel 7 können auch mehrere der in den Fig. 1, 2 dargestellten Kraftübertragungselemente 16 aufgesetzt sein, die alle gleichen Aufbau aufweisen und von denen jedes einen eigenen Antriebsmotor 21 trägt. Diese den einzelnen Kraftübertragungselementen einzeln zugeordneten verschiedenen Antriebsmotoren 21 gestatten es, den Kraftübertragungselementen 16 und den damit gekuppelten Maschinenelementen eine voneinander unabhängige Linearbewegung zu erteilen, der gegebenenfalls durch den Antrieb der Gewindespindel 7 eine gemeinsame Linearbewegung überlagert werden kann.

Bei dem dargestellten Ausführungsbeispiel sind die beiden Teile 11a, 11b der Spindelmutter 11 drehfest mit dem dazwischenliegenden büchsenartigen Zwischenstück 12 verbunden, welches die Außenverzahnung 20 trägt, die durch eine Wandausnehmung 130 des rohrförmigen Gehäuses 13 im Eingriffsbereich des Zahnrades 18 freiliegt. Alternativ wäre es auch denkbar, die Außenverzahnung 20 unmittelbar auf der Spindelmutter 11 anzuordnen, worauf der Ordnung halber hingewiesen sei.

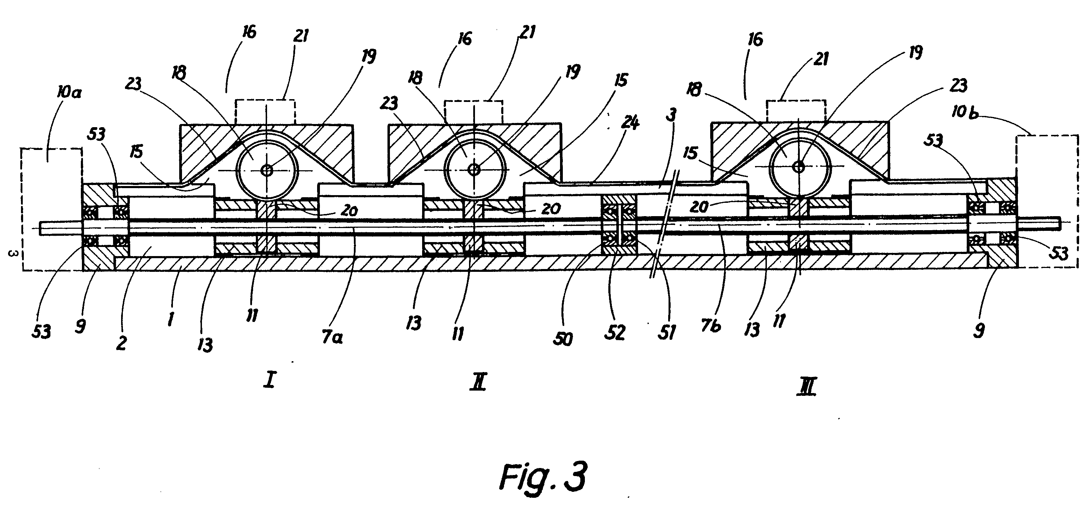

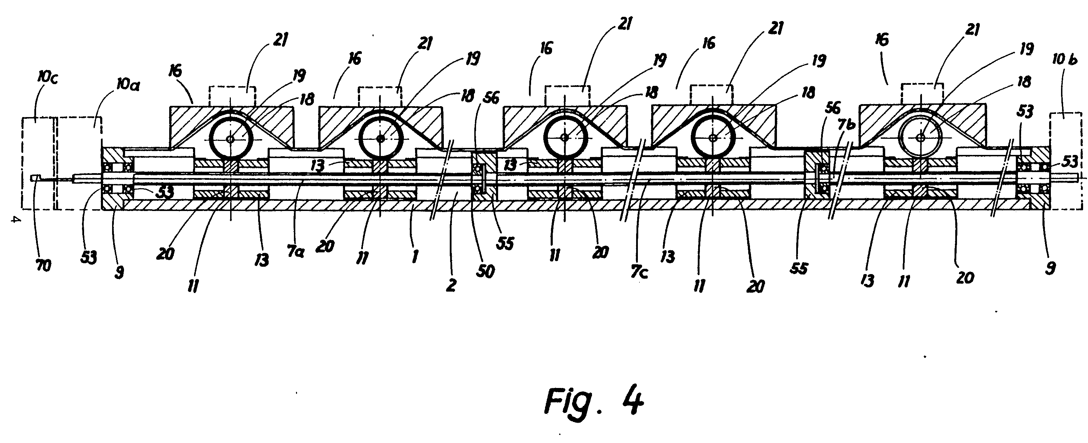

In den Fig. 3, 4 sind zwei vollständige Ausführungsformen der Linear-Antriebseinheit jeweils schematisch veranschaulicht, die sich durch zusätzliche Variationsmöglichkeiten der mit einer solchen Linear-Antriebseinheit zu erzielenden Linearbewegungen auszeichnen.

Dazu ist die nach den Fig. 1, 2 einstückig gezeigte Gewindespindel 7 in mehrere koaxiale Teile unterteilt, die in dem längsgeschlitzten Profilrohr 1 jeweils für sich gelagert sind und denen getrennte Antriebsquellen zugeordnet sein können.

Bei der Ausführungsform nach Fig. 3 sind zwei solche koaxiale Teilspindeln 7a, 7b vorgesehen, die beide einenends, nämlich an ihren aufeinander zu weisenden und in dem Profilrohr 1 liegenden Enden über getrennte Wälzlager 50, 51 und eine drehfest in die Längsbohrung 2 des Profilrohres 1 eingesetzte zylindrische Lagerbüchse 52 in dem Profilrohr 1 drehbar gelagert sind. Die dem anderen Ende jeder Teilspindeln 7a, 7b zugeordnete Lagerstelle ist in dem zugeordneten Lagerflansch 9 vorgesehen und durch in eine entsprechende Lagerbohrung der Lagerflansche 9 eingesetzte Wälzlager 53 gebildet. Auf die Lagerflansche 9 sind als getrennt ansteuerbare Antriebsquellen für die beiden Teilspindeln 7a, 7b zwei Elektromotoren 10a, 10b aufgesetzt. Alternativ könnte die Anordnung aber auch derart getroffen sein, daß wenigstens eine der Teilspindeln 7a, 7b in ihrem zugeordneten Lagerflansch 9 unverdrehbar gelagert ist.

Jede der beiden Teilspindeln 7a, 7b trägt zumindest eine Spindelmutter 11, die axial unverschieblich, aber verdrehbar in einer entsprechenden parallelflankig begrenzten Ausnehmung ihres zugeordneten rohrförmigen Gehäuses 13 gelagert ist. Jedes rohrförmige Gehäuse 13 trägt auf seiner Außenseite wiederum ein stegartiges Kupplungselement 15, das durch den Längsschlitz 3 des Profilrohres 1 nach außen ragt und ein Teil eines Kraftübertragungselementes 16 bildet, das mit einer nicht weiter dargestellten anzutreibenden Einrichtung, beispielsweise einem von ihm zu bewegenden Maschinenteil, gekuppelt werden kann.

Mit jedem der Kraftübertragungselemente 16 ist ein eine Antriebsquelle bildender Elektromotor 21 verbunden, der die Antriebswelle 19 antreibt, die ihrerseits drehfest mit dem schräg verzahnten Stirnzahnrad 18 des bereits erläuterten Winkelgetriebes verbunden ist. Das Stirnzahnrad 18 greift mit seiner Verzahnung in eine Außenverzahnung 20 der entsprechenden Spindelmutter 11 ein.

Das den Längsschlitz 3 zwischen den Kraftübertragungselementen 16 abdeckende Abdeckband 3 ist wiederum, wie anhand der Fig. 1, 2 veranschaulicht, über schräge Führungsflächen 23 des Kraftübertragungselementes 16 geführt.

Die Anzahl der auf einer Teilspindel 7a, 7b angeordneten, jeweils mit einer Antriebsquelle 21 gekuppelten Spindelmuttern 11 richtet sich nach dem jeweiligen Einsatzzweck ; die Darstellung in Fig. 3 stellt insoweit keine Beschränkung dar. Dabei ist es auch denkbar, daß einzelne der Spindelmuttern 11 drehfest mit ihrem rohrförmigen Gehäuse 13 verbunden sind und nicht mit einer an dem zugehörigen Kraftübertragungselement 16 angeordneten Antriebsquelle 21 in Verbindung stehen, derart, daß die Linearbewegung eines solchen Kraftübertragungselementes lediglich durch die Drehbewegung der zugeordneten Teilspindel 7a oder 7b erzeugt wird.

Durch entsprechende Wahl der Drehzahlen und Drehrichtungen der Antriebsquellen 10a, 10b der beiden Teilspindeln 7a, 7b und der Antriebsquellen 21 der einzelnen Kraftübertragungselemente 16 kann den Kraftübertragungselementen 16 jede gewünschte Relativbewegung sowohl zueinander als auch zu dem Profilrohr 1 erteilt werden. Dabei kann die Linearbewegung einzelner Kraftübertragungselemente 16 auch miteinander synchronisiert werden, während es andererseits insbesondere auch möglich ist, Kraftübertragungselemente 16 aufeinander zu oder voneinander weg bewegen zu können.

Der Vorteil einer solchermaßen gestalteten und angetriebenen Linear-Antriebseinheit liegt darüber hinaus darin, daß alle der verschiedene zweckentsprechende Lineargeschwindigkeiten aufweisenden und einzeln für sich verstellbaren Kraftübertragungselemente 16 in einem einzigen durchgehenden Profilrohr 1 geführt und gelagert sind, so daß sich die sonst für solche Anwendungszwecke notwendige Hintereinanderreihung mehrerer Linear-Antriebseinheiten erübrigt. Die Kraftübertragungselemente 19 können innerhalb dieses einen Profilrohres 1 auch in Stellungen bewegt werden, in denen sie alle oder einzelne von ihnen jeweils stirnseitig unmittelbar aneinander anliegen. Dies ist bei Antriebseinrichtungen, welche aus mehreren getrennten hintereinander angeordneten Linear-Antriebseinheiten bestehen, deshalb nicht ohne weiteres möglich, weil die Lagerflansche 9 und die auf diese aufgesetzten Antriebsquellen einen gewissen stirnseitigen Mindestabstand benachbarter Profilrohre bedingen würden.

Die in Fig. 4 veranschaulichte Ausführungsform einer Linear-Antriebseinheit entspricht im wesentlichen der vorstehend besprochenen, in Fig. 3 dargestellten Linear-Antriebseinheit, so daß sich eine nochmalige Erörterung übereinstimmender Teile erübrigt.

Abweichend von der Ausführungsform nach Fig. 3 ist aber bei der Ausführungsform nach Fig. 4 die Gewindespindel in drei Teilspindeln 7a, 7b und 7c aufgeteilt, von denen die beiden Teilspindeln 7a, 7b, wie in Fig. 3, über die Wälzlager 53 in den Lagerflanschen 9 drehbar gelagert und mit den auf die Lagerflansche 9 aufgesetzten, jeweils eine Antriebsquelle bildenden Elektromotoren 10a, 10b gekuppelt sind. Selbstverständlich könnte auch hier eine der Teilspindeln 7a oder 7b unverdrehbar in dem zugeordneten Lagerflansch gehaltert sein, womit der entsprechende Antriebsmotor 10a bzw. 10b entfällt.

Die dritte Teilspindel 7c ist zwischen den beiden aus dem Profilrohr 1 stirnseitig vorragenden Teilspindeln 7a, 7b in der Bohrung 2 des Profilrohres 1 in zylindrischen Lagerbüchsen 55 unverdrehbar gelagert, welche ihrerseits unverdrehbar mit dem Profilrohr 1 verbunden sind. Jede der Lagerbüchsen 55 weist eine koaxiale Lagerausnehmung 56 auf, in die das die entsprechende Teilspindel 7a bzw. 7b einenends drehbar lagernde Wälzlager 50 bzw. 51 eingesetzt ist.

Auf die drei Teilspindeln 7a, 7b, 7c sind wiederum in bereits beschriebener Weise mit ihren Spindelmuttern 11 Kraftübertragungselemente 16 aufgesetzt, die an dem Profilrohr 1 längsgeführt sind. Jedem der Kraftübertragungselemente 16 ist eine eigene, an dem Kraftübertragungselement angeordnete Antriebsquelle 21 zugeordnet, die es gestattet, das Kraftübertragungselement 16 durch entsprechenden Antrieb seiner Spindelmutter 11 längs des Profilrohres 1 zu bewegen.

Die mit den beiden außen liegenden Teilspindeln 7a, 7b gekuppelten Kraftübertragungselemente 16 können sowohl von der Antriebsquelle 10a bzw. 10b als auch von ihren zugeordneten Antriebsquellen 21 bewegt werden, während die Bewegung der mit der Teilspindel 7c gekuppelten Antriebselemente 16 lediglich über deren Antriebsquellen 21 erfolgt.

Durch entsprechende Auslegung und Ansteuerung der einzelnen Antriebsquellen 10a, 10b und 21 lassen sich praktisch alle denkbaren, voneinander unabhängigen Linearbewegungen der Kraftübertragungselemente 16 erzielen, die auch aufeinander zu oder voneinander weg oder in gegenseitiger Synchronisierung bewegt werden können.

Die Zahl der Teilspindeln, in die die Gewindespindel 7 der Ausführungsform nach Fig. 1, 2 aufgeteilt werden kann, ist theoretisch unbegrenzt; sie findet ihre Begrenzung lediglich durch die praktisch konstruktiven Gegebenheiten. Es ist auch ohne weiteres möglich, beispielsweise die in der Mitte liegende Teilspindel 7c der Ausführungsform nach Fig. 4 ebenfalls über eine eigene weitere Antriebsquelle anzutreiben, indem etwa eine der anstoßenden Teilspindeln 7a, 7b als Hohlspindel ausgeführt ist und eine koaxiale Antriebsspindel umschließt, die auf der einen Seite aus dem Profilrohr 9 herausgeführt und auf der anderen Seite mit der Teilspindel 7c drehfest gekuppelt ist. Diese Antriebsspindel ist in Fin. 4 bei 70 angedeutet. Ihr auf den Antriebsmotor 10a aufgeflanschter Antriebsmotor 10c ist gestrichelt veranschaulicht.

## Patentansprüche

1. Mechanische Linear-Antriebseinheit zur Erzeugung einer begrenzten Linearbewegung angetriebener Kraftübertragungsmittel (16), mit einer axial unverschieblich gelagerten Gewindespindel (7), mit dieser Spindelmuttermittel (11) in Eingriff stehen, die an den unverdrehbar längsgeführten Kraftübertragungsmitteln drehbar und axial unverschieblich gelagert sind, sowie mit der Gewindespindel zugeordneten ersten Antriebsmitteln (10) und mit zweiten Antriebsmitteln (21), die mit den Spindelmuttermitteln über an den Kraftübertragungsmitteln angeordnete Getriebemittel gekuppelt sind, dadurch gekennzeichnet, daß die Gewindespindel in zumindest zwei koaxiale Gewindespindelteile (7a, 7b) unterteilt ist, die wenigstens einenends in einem sie umschließenden, endseitig abgeschlossenen, formstabilen Profilrohr (1) gelagert sind, das einen Längsschlitz (3) aufweist, durch den die Kraftübertragungsmittel (16) nach außen ragen, daß wenigstens eines der Gewindespindelteile (7a, 7b) drehbar gelagert und mit den ersten Antriebsmitteln (10a, 10b) gekuppelt ist, daß die Spindelmuttermittel für jedes Gewindespindelteil (7a, 7b, 7c) wenigstens eine eigene Spindelmutter (11) mit einem zugeordneten Kraftübertragungselement (16) aufweisen und daß wenigstens eine der Spindelmuttern (11) über ein an ihrem Kraftübertragungselement (16) angeordnetes Getriebe (18, 20) mit zweiten Antriebsmitteln (21) gekuppelt ist.

2. Linear-Antriebseinheit nach Anspruch 1, dadurch gekennzeichnet, daß die mit den zweiten Antriebsmitteln (21) gekuppelte Spindelmutter eine Außenverzahnung trägt oder mit einem eine Außenverzahnung tragenden koaxialen Antriebselement (12) drehfest verbunden ist und daß in ihrem Kraftübertragungselement (16) wenigstens ein mit den zweiten Antriebsmitteln (21) gekuppeltes Zahnrad (18) drehbar gelagert ist, das durch den Längsschlitz (3) des Profilrohres (1) greift und mit der Außenverzahnung in Eingriff steht.

3. Linear-Antriebseinheit nach Anspruch 2, dadurch gekennzeichnet, daß das jeweilige Kraftübertragungselement (16) ein das zugeordnete Gewindespindelteil wenigstens teilweise umgreifendes Teil (13) aufweist, das in Achsrichtung beidseitig mit der Spindelmutter (11) gekuppelt und als ein in der Bohrung (2) des Profilrohres (1) axial geführtes rohrförmiges Gehäuse (13) ausgebildet ist.

4. Linear-Antriebseinheit nach einem der Ansprüche 1 bis 3, dadurch gekennzeichnet, daß auf wenigstens einem der Gewindespindelteile wenigstens zwei jeweils eine Spindelmutter (11) aufweisende Kraftübertragungselemente (16) angeordnet sind, von denen jedes mit eigenen zweiten Antriebsmitteln (21) verbunden ist.

5. Linear-Antriebseinheit nach einem der vorhergehenden Ansprüche, dadurch gekennzeichnet, daß wenigstens eines der Gewindespindelteile unverdrehbar gelagert ist.

6. Linear-Antriebseinheit nach einem der vorhergehenden Ansprüche, dadurch gekennzeichnet, daß mit dem Profilrohr (1) wenigstens eine außenliegende Längsführung verbunden ist, auf der wenigstens ein mit Kraftübertragungsmitteln (16) gekuppelter Schieber (35) verfahrbar ist.

7. Linear-Antriebseinheit nach Anspruch 6, dadurch gekennzeichnet, daß das Profilrohr (1) mittels seitlicher Klemmelemente (33) an einem Sockelteil (31) festgeklemmt ist, das seinerseits die Längsführung trägt.

8. Linear-Antriebseinheit nach den Ansprüche 6 und 7, dadurch gekennzeichnet, daß auf dem Sockelteil (31) eine Führungsschiene (34) für den Schieber (35) angeordnet ist.

9. Linear-Antriebseinheit nach einem der vorhergehenden Ansprüche, dadurch gekennzeichnet, daß der Längsschlitz (3) beidseitig jedes Kraftübertragungselementes (16) durch ein in Lagerflanschen (9) endseitig verankertes biegsames Abdeckband (24) abgedeckt ist, das kraft- und/oder formschlüssig in dem Längsschlitz (3) lösbar gehaltert ist.

10. Linear-Antriebseinheit nach Anspruch 1, dadurch gekennzeichnet, daß alle Kraftübertragungselemente (16) auf dem Profilrohr (1) längsgeführt sind.

**Claims**

1. A mechanical linear driving unit for generating a limited linear movement of driven force transmitting means (16), having : an axially non-slidably mounted threaded spindle (7) with which spindle nut means (11) engage which are mounted rotatably and axially non-displaceably on the non-rotatably longitudinally guided force transmitting means ; first driving means (10) associated with the threaded spindle ; and second driving means (21) which are coupled to the spindle nut means via transmission means disposed on the force transmitting means, characterized in that the threaded spindle is subdivided into at least two coaxial threaded spindle parts (7a, 7b) mounted at at least one end enclosed in a profile tube (1) of stable shape which is closed at one end and formed with a longitudinal slot (3) through which the force transmitting means (16) extend outwardly ; at least one of the threaded spindle parts (7a, 7b) is rotatably mounted and coupled to the first driving means (10a, 10b) ; the spindle nut means for each threaded spindle part (7a, 7b, 7c) have at least one own spindle nut (11) having an associated force transmitting element (16) ; and at least one of the spindle nuts (11) is coupled to the second driving means (21) via a gear (18, 20) disposed on its force transmitting element (16).

2. A linear driving unit according to claim 1, characterized in that the spindle nut coupled to the second driving means (21) bears an external toothing or is non-rotatably connected to a coaxial driving element (12) bearing an external toothing, and, that rotatably mounted in its force transmitting element (16) is at least one toothed wheel (18) which is coupled to the second driving means (21), engages through the longitudinal slot (3) of the profile tube (1) and meshes with the external toothing.

3. A linear driving unit according to claim 2, characterized in that each particular force transmitting element (16) has a member (13) which at least partially engages around the associated threaded spindle part, is coupled to the spindle nut (11) in the axial direction on both sides and is constructed in the form of a tubular casing (13) axially guided in the bore (2) of the profile tube (1).

4. A linear driving unit according to one of claims 1 to 3, characterized in that disposed on at least one of the threaded spindle parts are at least two force transmitting elements (16) which each have a spindle nut (11) and of which each is connected to its own second driving means (21).

5. A linear driving unit according to one of the preceding claims, characterized in that at least one of the threaded spindle parts is non-rotatably mounted.

6. A linear driving unit according to one of the preceding claims, characterized in that connected to the profile tube (1) is at least one external longitudinal guide on which at least one slide (35) coupled to force transmitting means (16) can be driven.

7. A linear driving unit according to claim 6, characterized in that the profile tube (1) is firmly clamped by means of lateral clamping elements (33) to a base member (31) which bears the longitudinal guide.

8. A linear driving unit according to claims 6 and 7, characterized in that a guide rail (34) for the slide (35) is disposed on the base member (31).

9. A linear driving element according to one of the preceding claims, characterized in that the longitudinal slot (3) is covered on both sides of each force transmitting element (16) by a flexible cover strip (24) which is anchored at the end in bearing flanges (9) and is releasably retained non-positively and/or positively in the longitudinal slot (3).

10. A linear driving unit according to claim 1, characterized in that all the force transmitting elements (16) are longitudinally guided on the profile tube (1).

## Revendications

1. Unité mécanique d'entraînement linéaire pour produire un mouvement linéaire limité de moyens de transmission de force entraînés (16), comportant : une tige filetée (7), montée sans possibilité de déplacement axial, avec laquelle sont en prise des moyens d'écrou (11) qui sont montés avec possibilité de rotation et sans possibilité de déplacement axial sur les moyens de transmission de force guidés longitudinalement, sans possibilité de rotation ; des premiers moyens d'entraînement (10) associés à la tige filetée ; et des deuxièmes moyens d'entraînement (21) qui sont couplés aux moyens d'écrou par l'intermédiaire de moyens réducteurs agencés sur les moyens de transmission de force, caractérisée par le fait que la tige filetée est subdivisée en au moins deux parties-tiges filetées qui sont coaxiales (7a, 7b), sont montées à au moins une extrémité dans un tube profilé (1), dimensionnellement stable, lequel les entoure, est fermé côté extrémité et présente une fente longitudinale (3) par laquelle les moyens de transmission de force (16) s'étendent vers l'extérieur, par le fait qu'au moins l'une des parties-tiges filetées (7a, 7b) est montée à rotation et est couplée aux premiers moyens d'entraînement (10a, 10b), par le fait que les moyens d'écrou pour chaque partie-tige filetée (7a, 7b, 7c) présentent au moins un écrou (11) propre à cette partie, auquel est associé un élément de transmission de force (16), et par le fait qu'au moins l'un des écrous (11) est couplé à des deuxièmes moyens d'entraînement (21) par l'intermédiaire d'un réducteur (18, 20) agencé sur son élément de transmission de force (16).

2. Unité d'entraînement linéaire selon revendication 1, caractérisée par le fait que l'écrou couplé aux deuxièmes moyens d'entraînement (21) porte une denture extérieure ou est solidarisé en rotation à un élément d'entraînement coaxial (12) portant une denture extérieure, et par le fait qu'au moins une roue dentée (18) couplée aux deuxièmes moyens d'entraînement (21) est montée à rotation dans son élément de transmission de force (16) et, en traversant la fente longitudinale (3) du tube profilé (1), est en prise avec la denture extérieure.

3. Unité d'entraînement linéaire selon revendication 2, caractérisée par le fait que chaque élément de transmission de force (16) présente une partie (13) qui entoure au moins partiellement la partie-tige filetée conjuguée et qui, des deux côtés en direction axiale, est couplée à l'écrou (11) et est réalisée sous la forme d'un carter tubulaire (13) guidé axialement dans l'alésage (2) du tube profilé (1).

4. Unité d'entraînement linéaire selon l'une des revendications 1 à 3, caractérisée par le fait que, sur au moins l'une des parties-tiges filetées, sont agencés au moins deux éléments de transmission de force (16) présentant chacun un écrou (11) et reliés chacun à des deuxièmes moyens d'entraînement (21) qui lui sont propres.

5. Unité d'entraînement linéaire selon l'une des revendications précédentes, caractérisée par le fait qu'au moins l'une des parties-tiges filetées est montée sans possibilité de rotation.

6. Unité d'entraînement linéaire selon l'une des revendications précédentes, caractérisée par le fait qu'au tube profilé (1) est relié au moins un guide longitudinal extérieur sur lequel peut être déplacé au moins un coulisseau (35) couplé à des moyens de transmission de force (16).

7. Unité d'entraînement linéaire selon revendication 6, caractérisée par le fait que le tube profilé (1) est immobilisé par serrage, au moyen d'éléments de serrage latéraux (33), sur une partie socle (31) portant le guide longitudinal.

8. Unité d'entraînement linéaire selon les revendications 6 et 7, caractérisée par le fait qu'un rail de guidage (34) pour le coulisseau (35) est agencé sur la partie socle (31).

9. Unité d'entraînement linéaire selon l'une des revendications précédentes, caractérisée par le fait que la fente longitudinale (3) est recouverte, des deux côtés de chaque élément de transmission de force (16), par une bande de recouvrement flexible (24) ancrée côté extrémité dans des brides de palier (9) et maintenue amoviblement, par serrage et/ou par conjugaison de formes, dans la fente longitudinale (3).

10. Unité d'entraînement linéaire selon revendication 1, caractérisée par le fait que tous les éléments de transmission de force (16) sont guidés longitudinalement sur le tube profilé (1).

Fig. 1

Fig. 2

0 193 749

Fig. 3

Fig. 4